# EUROPEAN PATENT SPECIFICATION

(11) **EP 1 895 508 B1**
(45) Date of publication and mention of the grant of the patent: **06.10.2010**
(21) Application number: 06746950.2
(22) Date of filing: 29.05.2006
(51) Int. Cl.: G10L 15/26

(54) **SPEECH RECOGNIZING DEVICE, INFORMATION PROCESSING DEVICE, SPEECH RECOGNIZING METHOD, PROGRAM, AND RECORDING MEDIUM**
SPRACHERKENNUNGSEINRICHTUNG, INFORMATIONSVERARBEITUNGSEINRICHTUNG, SPRACHERKENNUNGSVERFAHREN, PROGRAMM UND AUFZEICHNUNGSMEDIUM
DISPOSITIF DE RECONNAISSANCE VOCALE, DISPOSITIF DE TRAITEMENT D'INFORMATION, METHODE DE RECONNAISSANCE VOCALE, PROGRAMME ET SUPPORT D'ENREGISTREMENT

(30) Priority: 21.06.2005 JP 2005181064
(43) Date of publication of application: 05.03.2008
(73) Proprietor: Pioneer Corporation, Tokyo 153-8654 (JP)
(72) Inventor: YAMAMOTO, Kentaro, c/o Pioneer Corporation, Kawagoe-shi, Saitama 3508555 (JP)
(74) Representative: Haley, Stephen
(86) International application number: PCT/JP2006/310672
(87) International publication number: WO 2006/137245

(56) References cited:
- EP-A- 1 004 957
- WO-A-02/50818
- JP-A- 2000 222 689
- JP-A- 2002 318 597
- JP-A- 2003 044 074
- JP-A- 2003 241 784
- JP-A- 2005 123 964
- JP-B2- 2 589 299

## Description

### TECHNICAL FIELD

The present invention relates to a speech recognizing apparatus recognizing uttered speech, an information processing apparatus, a speech recognizing method, a speech recognizing program, and a recording medium. Application of the present invention is not limited to the above speech recognizing apparatus, the information processing apparatus, the speech recognizing method, the speech recognizing program, and the recording medium.

### BACKGROUND ART

Conventionally, speech recognition technologies are known which recognize human speech input through microphones. In such speech recognition, user speech input is received and word candidates corresponding to the user speech input are determined by a process of matching the user speech input with preset expected-words. Then, it is determined whether a matching word is included among the word candidates. The expected-words are words that are expected to be uttered by a user in a given situation (see, for example, Patent Document 1). WO-A1-02/50818 discloses a personal digital assistant with joystick input and speech input using a context specific vocabulary, wherein even commands that are not displayed are recognizable. EP-A1-1004957 discloses that the function having the highest frequency of use is allocated to the main soft key.

Patent Document 1: Japanese Patent Application Laid-Open Publication No. 2004-46106

### DISCLOSURE OF INVENTION

### PROBLEM TO BE SOLVED BY THE INVENTION

However, in the conventional technologies, an example of a problem is that all the words expected to be uttered by a user in a given situation must be defined as the expected-words. Speech recognition is performed through a process of matching the input speech with the preset expected-words. Therefore, to improve speed of the speech recognition process, it is preferable for the number of the expected-words to be as few as possible.

Speech recognition is often used as an input mode taking the place of operation keys and keyed input, and the expected-words are often displayed on a display screen. In such a case, an example of a problem is that as there are many expected-words, the display screen becomes cluttered with the display of the expected-words, or characters on the display screen become small and difficult to visually recognize.

### MEANS FOR SOLVING PROBLEM

To solve the above problems and achieve an object, a speech recognizing apparatus according to the invention of claim 1 includes a speech input unit to which speech is input; a displaying unit that displays a plurality of expected-words that are preset; an operation input unit that enables selection of any one of the expected-words displayed by the displaying unit; a counting unit that counts a number of times each of the expected-words is included in the speech input to the speech input unit and a number of times each of the expected-words is selected through the operation input unit; an extracting unit that extracts, from among the expected-words and based on the numbers of times counted by the counting unit, a preferential display word that is displayed preferentially; a display controlling unit that preferentially displays, on the displaying unit, the preferential display word extracted by the extracting unit; and a speech recognizing unit that performs speech recognition of the speech input to the speech input unit, wherein priority is given to the expected-words, excluding the preferential display word.

Further, an information processing apparatus according to the invention of claim 5 includes a speech input unit to which speech is input; a plurality of operation input units that enable any one of a plurality of functions of an apparatus to be executed; a counting unit that counts a number of times a name of a function among the functions is included in the speech input to the speech input unit and a number of times each of the functions is executed through the operation input units; a determining unit that determines, based on the numbers of times counted by the counting unit, a preferential allocation function to be allocated to an operator input unit having a position close to an operator, among the operation input units; and a speech recognizing unit that performs speech recognition of the speech input to the speech input unit, wherein priority is given to the functions, excluding the preferential allocation function determined by the determining unit.

Moreover, a speech recognizing method according to the invention of claim 6 includes a speech inputting step of inputting speech; a displaying step of displaying a plurality of expected-words that are preset; an operation inputting step of selecting of any one of the expected-words displayed at the displaying step; a counting step of counting a number of times each of the expected-words is included in the speech input to the speech input unit and a number of times each of the expected-words is selected through the operation input unit; an extracting step of extracting, from among the expected-words and based on the numbers of times counted at the counting step, a preferential display word that is displayed preferentially; a display controlling step of controlling to preferentially display, at the displaying step, the preferential display word extracted at the extracting step; and a speech recognizing step of performing speech recognition of the speech input at the speech inputting step, wherein priority is given to the expected-words, excluding the preferential display word.

Furthermore, an information processing method according to the invention of claim 7 includes a speech inputting step of inputting speech; an operation inputting step of executing any one of a plurality of functions; a counting step of counting a number of times a name of a function among the functions is included in the speech input at the speech inputting step and a number of times each of the functions is executed at the operation inputting step; a determining step of determining, based on the number of times counted at the counting step, a preferential allocation function to be allocated to a position close to an operator, among a plurality of the operation inputting steps; and a speech recognizing step of performing speech recognition of the speech input at the speech inputting, wherein priority is given to the functions, excluding the preferential allocation function determined at the determining step.

Further, a speech recognition program according to the invention of claim 8 causes a computer to execute the speech recognition method according to any one of claims 6 and 7.

Furthermore, a computer-readable recording medium according to the invention of claim 9 stores therein the speech recognition program according to claim 8.

### BRIEF DESCRIPTION OF DRAWINGS

Fig. 1 is a block diagram of a functional configuration of a speech recognizing apparatus according to an embodiment;
Fig. 2 is a flowchart of a procedure of the speech recognition process of the speech recognizing apparatus;
Fig. 3 is a block diagram of a hardware configuration of a navigation apparatus according to a first example;
Fig. 4 is a flowchart of a procedure of accepting the user setting operation by the navigation apparatus;
Fig. 5 is a schematic of an example of the destination point setting screen;
Fig. 6 is a table of examples of destination point candidate selection counts;
Fig. 7 is a table illustrating the destination point candidates shown in Fig. 6 in descending order of the selection count after sorting;
Fig. 8 is a table of phrases registered in the speech recognition dictionaries;
Fig. 9 is a schematic of an example of the destination point setting screen taking into consideration the recommended points;
Fig. 10 is a schematic of the destination point setting operation by a user;
Fig. 11 is a flowchart of a user setting operation process by the navigation apparatus;
Fig. 12 is a table of selection count examples for the destination point candidates;
Fig. 13 is a schematic of an example of the destination point setting screen taking into consideration the selection count by genre;
Fig. 14 is a schematic of an example of the destination point setting screen taking into consideration the selection count by genre;
Fig. 15 is a schematic of an external appearance of the navigation apparatus according to the second example;
Fig. 16 is a schematic of function indicator examples of the function keys;
Fig. 17 is a schematic of function indicator examples of the function keys;
Fig. 18 is a table of examples of usage frequencies and usage rates of the functions;
Fig. 19 is a schematic of the function allocation to the function keys taking into consideration the usage rates of the functions; and
Fig. 20 is a table of phrases registered in the speech recognition dictionary for executing the functions allocated to the function keys.

### EXPLANATIONS OF LETTERS OR NUMERALS

- 100: speech recognizing apparatus
- 101: speech input unit
- 102: displaying unit
- 103: operation input unit
- 104: counting unit
- 105: extracting unit
- 106: display controlling unit
- 107: speech recognizing unit

### BEST MODE(S) FOR CARRYING OUT THE INVENTION

Referring to the accompanying drawings, an exemplary embodiment of a speech recognizing apparatus, an information processing apparatus, a speech recognizing method, a speech recognizing program, and a recording medium according to the present invention are explained in detail below.

### (Embodiment)

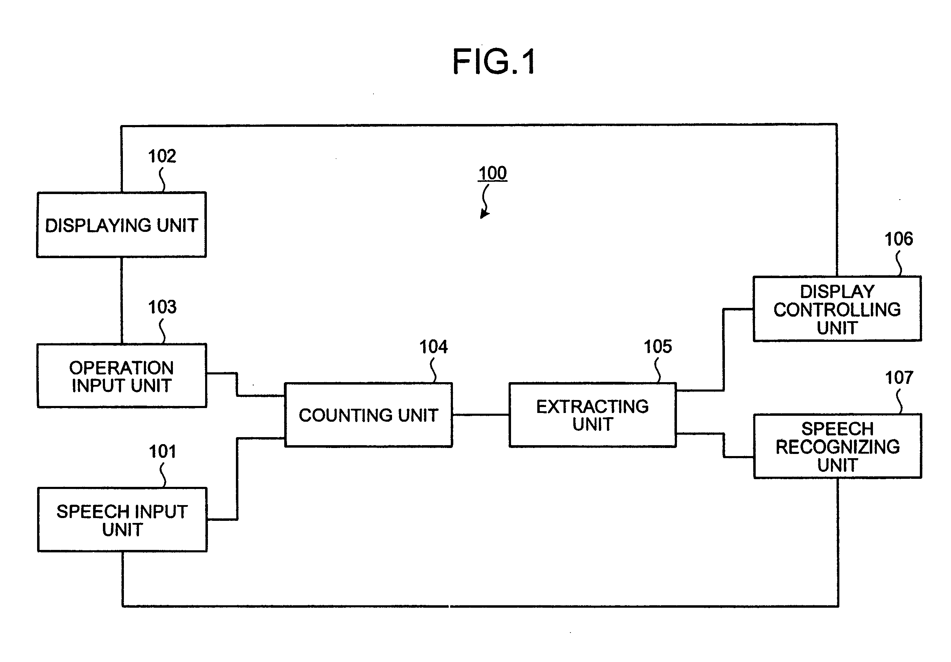

Fig. 1 is a block diagram of a functional configuration of a speech recognizing apparatus according to the embodiment. In Fig. 1, a speech recognizing apparatus 100 according to the embodiment is configured by a speech input unit 101, a displaying unit 102, an operation input unit 103, a counting unit 104, an extracting unit 105, a display controlling unit 106, and a speech recognizing unit 107.

To the speech input unit 101, speech is input. The speech can be input by a user uttering a predefined phrase. The displaying unit 102 displays preset expected-words. The preset expected-words are words and phrases that can be speech-recognized by the speech recognizing unit 107 and are, for example, the names of places, or operation instructing words for the apparatus.

The operation input unit 103 is provided to enable selection from among the preset expected-words displayed on the displaying unit 102. The operation input unit 103 is implemented by a touch panel or operation buttons, for example. If the operation input unit 103 is a touch panel, the displaying unit 102 can be integrated with the operation input unit 103.

The counting unit 104 counts the number of times each expected-word is included in the speech input to the speech input unit 101 and the number of times each expected-word is selected using the operation input unit 103. The counting unit 104 may count the number of times for each genre, to which the expected-words belong. The genres, to which the expected-words belong, are categories of the expected-words (such as names of places and operation instructing words) and attributes of facilities (such as eating and drinking establishments and recreation places), for example.

The extracting unit 105 extracts preferential display words, which are expected-words that are preferentially displayed among the expected-words, based on the count number by the counting unit 104. For example, the extracting unit 105 extracts a preferential display word as an expected-word having a high count number counted by the counting unit 104. Instead of extracting particular expected-words, each of the expected-words may be prioritized based on the count number counted by the counting unit 104. If the counting unit 104 counts the number of times for each genre, the extracting unit 105 extracts a preferential display word as an expected-word belonging to a genre having a high count number counted by the counting unit 104.

The display controlling unit 106 preferentially displays the preferential display words extracted by the extracting unit 105 on the displaying unit 102. For example, preferentially displaying means that the preferential display words are displayed from the top of the screen in descending order of the count number or are located at a position where the words are visible without use of the scroll operation.

The speech recognizing unit 107 gives priority to the expected-words over the preferential display words to perform speech recognition of the speech input to the speech input unit 101. For example, giving priority to the expected-words over the preferential display words means that the matching process using the input speech is performed first for the expected-words, before the preferential display words. If multiple expected-words other than the preferential display words are present, a priority order may be determined among those expected-words.

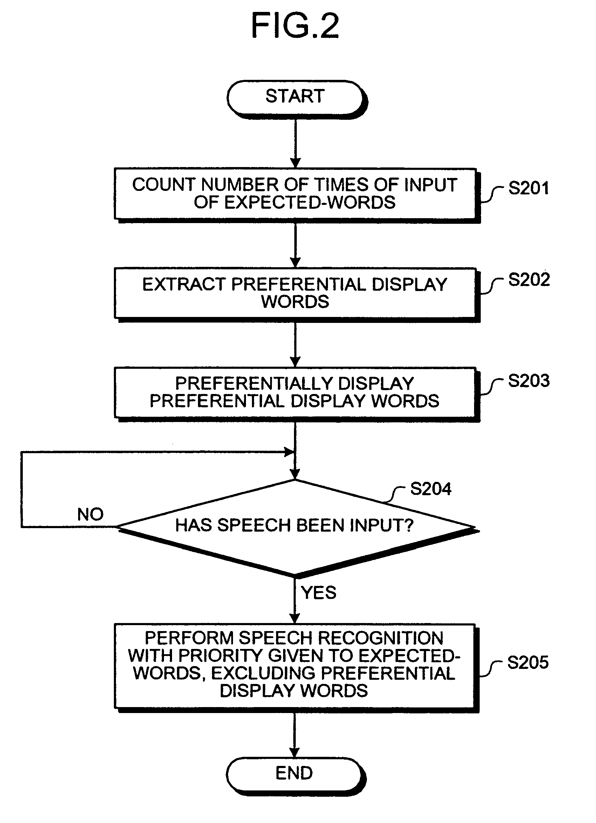

Fig. 2 is a flowchart of a procedure of the speech recognition process of the speech recognizing apparatus. In the speech recognizing apparatus 100, the counting unit 104 first counts the number of times of input of the expected-words input verbally through the speech input unit 101 or input by operations through the operation input unit 103 (step S201). The extracting unit 105 extracts the preferential display words, which are expected-words preferentially displayed among the expected-words (step S202). The display controlling unit 106 preferentially displays the preferential display words extracted by the extracting unit 105 on the displaying unit 102 (step S203).

While waiting for speech input (step S204: No loop), if speech input occurs (step S204: Yes), the speech recognition of the input speech is performed with priority given to the expected-words, excluding the preferential display words (step S205), and the process of the flowchart is terminated.

As described above, in the speech recognizing apparatus 100 according to the embodiment, by prioritizing the expected-words for the speech recognition, the expected-words are narrowed down, thereby enabling improvement of the efficiency of the speech recognition process. The preferentially displayed expected-words can be extracted according to the number of times of input of the expected-words for simple screen display. The speech recognition can preferentially be performed for expected-words not having high priority to avoid cumbersome operations when selecting these expected-words.

### First Example

### (Hardware Configuration of Navigation Apparatus 300)

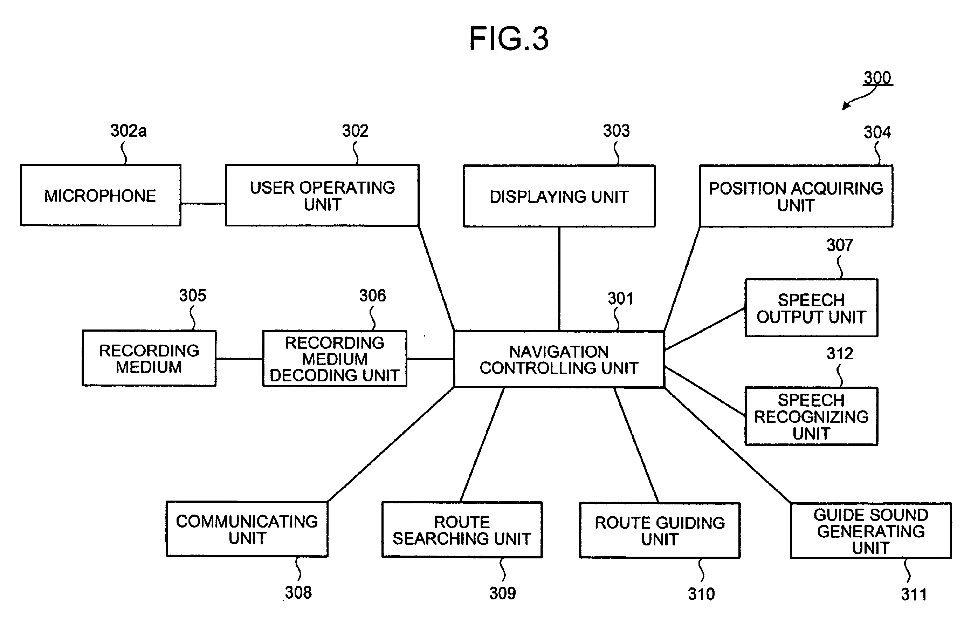

Fig. 3 is a block diagram of a hardware configuration of a navigation apparatus according to a first example. The first example describes the case of using the speech recognizing apparatus 100 according to the embodiment as an input unit of a navigation apparatus 300. In Fig. 3, the navigation apparatus 300 is mounted on a vehicle and is configured by a navigation controlling unit 301, a user operating unit 302, a displaying unit 303, a position acquiring unit 304, a recording medium 305, a recording medium decoding unit 306, a sound output unit 307, a communicating unit 308, a route searching unit 309, a route guiding unit 310, a guide sound generating unit 311, and a speech recognizing unit 312.

The navigation controlling unit 301 controls the navigation apparatus 300 overall. The navigation controlling unit 301 can be implemented by a microcomputer, etc., configured by a CPU (Central Processing Unit) that executes predetermined calculation processes, a ROM (Read Only Memory) that stores various control programs, and a RAM (Random Access Memory) that serves as a work area of the CPU.

When performing route guidance, the navigation controlling unit 301 inputs/outputs information related to the route guidance between the route searching unit 309, the route guiding unit 310, and the guide sound generating unit 311 and outputs information acquired as a result to the displaying unit 303 and the sound output unit 307.

The user operating unit 302 outputs to the navigation controlling unit 301 the information input through user operations such as characters, numeric values, and various instructions. The user operating unit 302 can be configured by employing various known forms such as a touch panel integrated with the displaying unit 303 described hereinafter, push-button switches physically detecting press-down/non-press-down, a keyboard, and a joystick.

The user operating unit 302 includes a microphone 302a that inputs speech from an external source. The speech input through the microphone 302a is speech-recognized by the speech recognizing unit 312 described hereinafter, thereby enabling a user to perform input operation verbally.

The user operating unit 302 may be integrally disposed on the navigation apparatus 300 or may be in a form that can be operated separately from the navigation apparatus 300 such as a remote controller. The user operating unit 302 may be configured in a single form or in a plurality of forms among the various forms mentioned above. A user appropriately performs input operations to input information according to the form of the user operating unit 302. The information input by operating the user operating unit 302 includes destination points and start points of routes to be retrieved, for example.

The destination points and the start points of routes to be retrieved are entered by inputting latitudes/longitudes of the points, or telephone numbers, genres, and keywords can be specified for facilities that are to be the destination points or the start points to search for corresponding facilities and locate the positions thereof. More specifically, this information is identified as one point on the map based on background type data included in the map information recorded in the recording medium 305 described hereinafter. The map information may be displayed on the displaying unit 303 described hereinafter to specify one point on the displayed map.

The displaying unit 303 includes a CRT (Cathode Ray Tube), a TFT (Thin Film Transistor) liquid crystal display, an organic EL (Electroluminescence) display, and a plasma display, for example. Specifically, the displaying unit 303 can be configured by a display apparatus for video display connected to a video I/F and an audio I/F, for example. Specifically, the video I/F includes, for example, a graphic controller that generally controls the display apparatus, a buffer memory such as VRAM (Video RAM) that temporarily stores image information that can immediately be displayed, and a control IC that controls display on the display apparatus based on the image information output from the graphic controller. The displaying unit 303 displays icons, cursors, menus, windows, or various types of information such as texts and images. The displaying unit 303 also displays the map information and information related to the route guide stored in the recording medium 305 described later.

The position acquiring unit 304 is configured by a GPS receiver and various sensors to acquire information of a current position of the apparatus main body (a current vehicle position). When the position acquiring unit 304 enters a given area such as an area where the GPS receiver cannot receive the GPS information, the position acquiring unit 304 receives GPS alternative information transmitted from a transmitter disposed in that area to detect the current vehicle position.

The GPS receiver receives the GPS information transmitted from GPS satellites to obtain a geometric position relative to the GPS satellites. The GPS stands for Global Positioning System and is a system that receives radio waves from four or more satellites to precisely obtain a position on the ground. The GPS receiver is configured by an antenna for receiving the radio waves from the GPS satellites, a tuner that demodulates the received radio waves, and a calculation circuit that calculates the current position based on the demodulated information.

The various sensors are various sensors mounted on the own vehicle such as a vehicle speed sensor, an angular speed sensor, a traveled distance sensor, and a tilt sensor and obtains a traveled route of the vehicle. The vehicle position can be recognized with high precision by using the information output by the various sensors mounted on the vehicle in conjunction with the information externally acquired by the GPS receiver.

The vehicle speed sensor detects the speed from the output side of the transmission shaft of the vehicle having the navigation apparatus 300 mounted thereon. The angular speed sensor detects an angular speed when the own vehicle turns and outputs angular speed information and relative direction information. The traveled distance sensor counts the number of pulses of a pulse signal output in association with rotation of a traveling wheel and having a predetermined cycle to calculate the number of pulses per rotation of the traveling wheel and outputs traveled distance information based on the number of pulses per rotation.

The recording medium 305 has various control programs and various pieces of information recorded thereon in a computer-readable manner. The recording medium 305 accepts information written by the recording medium decoding unit 306 and stores the written information in a nonvolatile form. The recording medium 305 can be implemented by an HD (Hard Disk), for example. The recording medium 305 is not limited to the HD, and the recording medium 305 may be a portable medium removable from the recording medium decoding unit 306, such as DVD (Digital Versatile disc) and CD (Compact Disc) instead of the HD or in addition to the HD. The recording medium 305 is not limited to DVD and CD and can be a portable medium removable from the recording medium decoding unit 306, such as CD-ROM (CD-R, CD-RW), MO (Magneto-Optical disc), and memory cards.

The map information stored in the recording medium 305 include background data representing features, for example, buildings, rivers, and ground surfaces, and road shape data representing shapes of roads, and are depicted two-dimensionally or three-dimensionally on a display screen of the displaying unit 303. During the route guide of the navigation apparatus 300, the map information recorded in the recording medium 305 is overlapped and displayed with the own vehicle position acquired by the position acquiring unit 304.

Although the map information is recorded in the recording medium 305 in this example, this is not a limitation. The map information is not necessarily recorded in a medium integrally disposed on the hardware of the navigation apparatus 300 and may be disposed externally from the navigation apparatus 300. In such a case, the navigation apparatus 300 acquires the map information through a network, for example. The acquired information is stored in the RAM, etc.

The recording medium decoding unit 306 controls read/write of information from/to the recording medium 305. For example, if the HD is used as the recording medium, the recording medium decoding unit 306 is a HDD (Hard Disk Driver). Similarly, if the DVD or the CD (including CD-R and CD-RW) is used as the recording medium, the recording medium decoding unit 306 is a DVD drive or CD drive. If CD-ROM (CD-R, CD-RW), MO (Magneto-Optical disc), and memory cards are utilized as the writable and removable recording medium 305, dedicated drive apparatuses capable of writing information into the various recording media and reading information recorded in the various recording media may arbitrarily be used as the recording medium decoding unit 306.

The sound output unit 307 controls output to a connected speaker (not shown) to reproduce a guide sound. One or a plurality of speakers may be included. Specifically, the sound output unit 307 can be implemented by an audio I/F connected to the speaker for audio output. More specifically, the audio I/F can be configured by a D/A converter that performs D/A conversion of audio digital information, an amplifier that amplifies the audio analog signals output from the D/A converter, and an A/D converter that performs A/D conversion of audio analog information.

The communicating unit 308 regularly (or irregularly) receives traffic information such as congestion and traffic regulations. The communicating unit 308 is connected to a network to receive/transmit information from/to other devices such as servers connected to the network.

The communicating unit 308 may receive the traffic information according to the timing of delivery of the traffic information from the VICS (Vehicle Information and Communication System) center or by regularly requesting the VICS center to deliver the traffic information. Alternatively, the traffic information of a desired area may be acquired from nationwide VICS information centralized in a server. The communicating unit 308 can be implemented by an FM tuner, a VICS/beacon receiver, a wireless communication device, or other communication devices.

The route searching unit 309 searches for an optimal route from a start point to a destination point utilizing the map information stored in the recording medium 305 and the VICS information acquired through the communicating 308. The optimal route is a route best satisfying the conditions specified by a user. Generally, a number of routes exist between a start point and a destination point. Therefore, points to be taken into consideration are set when searching for a route that satisfies the conditions.

The navigation controlling unit 301 generates real-time route guiding information based on the guide route information retrieved by the route searching unit 309, the own vehicle position information acquired by the position acquiring unit 304, and the map information acquired through the recording medium decoding unit 306 from the recording medium 305. The route guiding information generated here may take into consideration the traffic congestion information received by the communicating unit 308. The route guiding information generated by the navigation controlling unit 301 is output to the displaying unit 303 through the navigation controlling unit 301.

The guide sound generating unit 311 generates information of tones and sounds corresponding to patterns. That is, based on the route guide information generated by the route guiding unit 310, the guide sound generating unit 311 sets a virtual sound source corresponding to the guide points and generates the sound guidance data, which are output to the guide sound output unit 307 through the navigation controlling unit 301.

The speech recognizing unit 312 recognizes speech input through the microphone 302a. When the speech is recognized by the speech recognizing unit 312, the navigation controlling unit 301 performs a process corresponding to the recognized word. When speech is uttered to a destination-point setting screen and a place name is recognized through the speech recognition, the navigation controlling unit 301 sets the recognized place name as the destination point. Instead of specifying the destination point on the map displayed on the displaying unit 303, a user can set the destination point by uttering the name of the destination point. The speech recognition by the speech recognizing unit 312 can replace the function of the user operating unit 302.

Although various speech recognition techniques are known, in general, frequency analysis of frequency distribution of the input speech is preliminarily performed for speech to be recognized; for example, spectrums and time-series information of fundamental frequencies are extracted as an attribute levels of the input speech; and a speech recognition dictionary is included to store the corresponding patterns thereof to the words.

If the speech to be recognized is input, the frequency spectrum of the input speech is analyzed, compared and checked against predetermined phonemic models to identify phonemes. The identified phonemic model is compared and checked against the word patterns stored in the speech recognition dictionary through the pattern matching to calculate a similarity degree for each word. The word having the highest calculated similarity degree (the word of the closest pattern) is recognized as the input speech and the word is output. That is, the input speech is determined by examining which word pattern is most similar to the frequency distribution pattern of the input word.

In the speech recognizing unit 312, the number of words subjected to the matching process at one time in the speech recognition process is limited due to the processing time of the matching process. As described above, the speech recognizing unit 312 compares and checks the frequency pattern of the input speech against all the word patterns stored in the speech recognition dictionary to calculate the similarity degree of each word. Therefore, the fewer the number of words registered in the speech recognition dictionary, the greater the processing time can be reduced. However, if no registered word coincides with the uttered word, mis-recognitions and errors (no corresponding word) frequently occur, resulting in lower usability.

Therefore, the speech recognizing unit 312 sets a priority in the speech recognition (hereinafter, a speech recognition priority) for each word, and a plurality of words is allocated to a plurality of dictionaries based on the speech recognition priorities. When the speech recognition process is executed, the matching process is executed from the dictionary allocated with words having higher speech recognition priorities, thereby enabling a more efficient speech recognition process while maintaining the accuracy of the speech recognition.

Although various factors may be used to determined the speech recognition priorities set to the words, the speech recognition priority of a word is set based on the number of times the word is selected in the speech recognition or the operation of the user operating unit 302 in this example. Menu items frequently used by a user are generally displayed at higher orders. Therefore, words frequently selected by a user are preferentially displayed on the displaying unit 303 to facilitate the operation through the user operating unit 302 (such as a touch panel). On the other hand, words not frequently selected are provided with lower display priorities on the displaying unit 303. Instead, the speech recognition priorities are set higher to preferentially perform the speech recognition.

The priorities are determined in this way because the operation is facilitated if the frequently selected words are quickly selected on a touch panel, etc., and it is less advantageous to use the speech recognition. Therefore, for the frequently selected words, the display priorities are set higher while the speech recognition priorities are set lower. On the contrary, it is often difficult to determine which genres the words not frequently selected are categorized by and to search the words from the display on the setting screen. The operation can be facilitated by using the speech recognition to select such words. Therefore, for the words not frequently selected, the display priorities are set lower while the speech recognition priorities are set higher. With such setting, the speech recognizing unit 312 can improve the processing speed of the speech recognition.

The navigation apparatus 300 is configured by the above hardware configuration. The functions of the functional constituent elements of the speech recognizing apparatus 100 according to the embodiment are implemented by the microphone 302a for the speech input unit 101, by the displaying unit 303 for the displaying unit 102, by the user operating unit 302 for the operation input unit 103, by the navigation controlling unit 301 for the counting unit 104, the extracting unit 105, and the display controlling unit 106, and by the speech recognizing unit 312 for the speech recognizing unit 107.

### (Procedure of Accepting User Setting Operation)

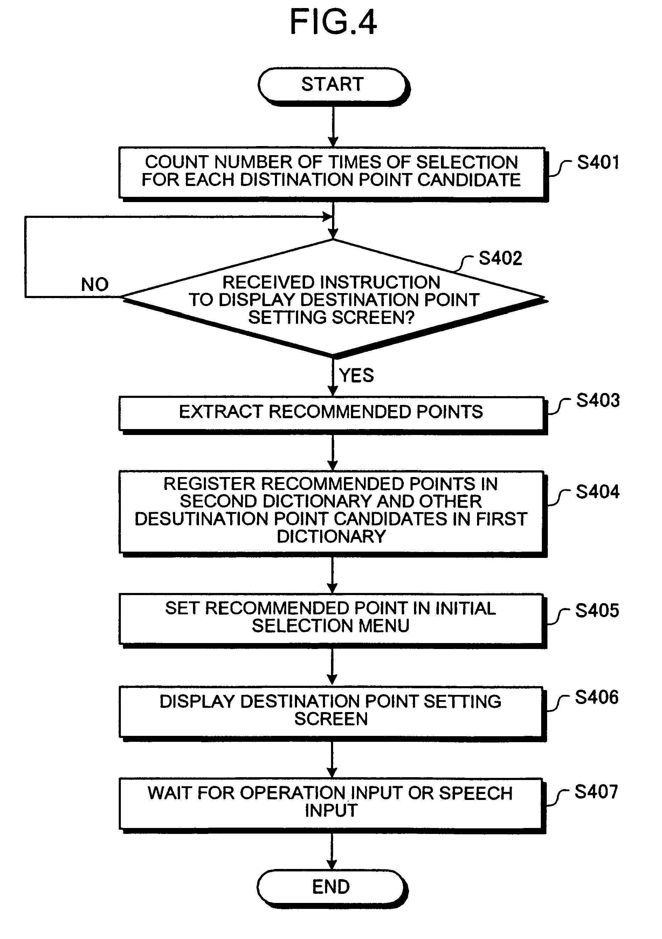

Fig. 4 is a flowchart of a procedure of accepting the user setting operation by the navigation apparatus. As described above, the setting operation for the navigation apparatus 300 can be performed by the speech recognition performed by the speech recognizing unit 312 or by the operation input through the user operating unit 302. Although various types of the setting operation are performed for the navigation apparatus 300, the case of setting a destination point will be taken as an example in this description.

First, the navigation controlling unit 301 counts the number of times of selection for each destination point candidate (step S401). The destination point is set by defining destination point candidates as facilities having preliminarily registered attributes and selecting a destination point candidate. The facilities having preliminarily registered attributes are, for example, eating and drinking establishments, such as a Chinese noodle shop and family restaurants, and retail shops, such as supermarkets and bookstores. Selection from these destination point candidates is performed by the pressing of a facility-name button displayed on the touch panel or by the recognition of speech uttered by a user. Alternatively, a facility on the map may be selected or the previous destination point may be read out, for example.

The navigation controlling unit 301 waits for a display instruction for a destination point setting screen (step 402: NO loop), and if it is instructed to display the destination point setting screen (step S402: Yes), the navigation controlling unit 301 extracts recommended points (step S403). The display instruction for the destination point setting screen is performed at the time of setting a destination point, such as when a route is searched for. The recommended points are destination point candidates having the higher selection counts counted at step S401 (more specifically, phrases indicating the destination point candidates having the higher numbers of times of selection). The speech recognizing unit 312 ranks the destination point candidates according to the selection count to extract words having the higher selection counts. The number of the recommended points extracted in descending order is dependent on a capacity of the speech recognition dictionary described hereinafter.

The speech recognizing unit 312 registers the recommended points extracted at step S403 into a second speech recognition dictionary (hereinafter, a second dictionary) and other destination point candidates (more specifically, phrases indicating other destination point candidates) into a first speech recognition dictionary (hereinafter, a first dictionary) (step S404). The first dictionary is a speech recognition dictionary for registering phrases with the higher speech recognition priorities. The second dictionary is a speech recognition dictionary for registering phrases with the lower speech recognition priorities. In the speech recognition process, first, the matching process is performed for the phrases registered in the first dictionary and if no corresponding phrase exists, the matching process is performed for the phrases registered in the second dictionary.

Although two speech recognition dictionaries are used in this case, words may be allocated to more speech recognition dictionaries corresponding to the number of times of selection. Especially when a large amount of words should be allocated, the number of words allocated to one speech recognition dictionary can be reduced by allocating the words to multiple speech recognition dictionaries.

The navigation controlling unit 301 then sets the recommended points in an initial selection menu (step S405) and displays a destination point setting screen (step S406). The initial setting menu includes items initially displayed as the destination point candidates on the destination point setting screen. Since multiple destination point candidates exist, the screen display becomes complicated if all the candidates are displayed on the screen at one time. Therefore, the recommended points frequently selected as the destination point are located in the initial selection menu. For example, if all the destination point candidates are displayed using a scroll bar, etc., the recommended point information is displayed at a position displayed that is visible without scrolling, thereby allowing a user to set the destination point with a simple operation while avoiding complicated display.

The navigation controlling unit 301 goes to step of waiting for operation input through the user operating unit 302 or speech input (step S407) and the process of the flowchart is terminated. With the above process, the navigation apparatus 300 accepts the setting operation from a user.

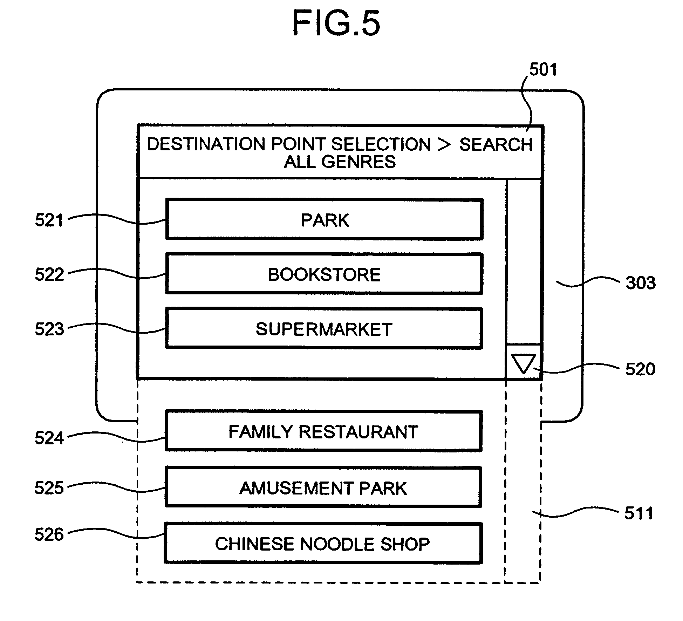

Fig. 5 is a schematic of an example of the destination point setting screen. The displaying unit 303 displays a plurality of destination point candidate displays 521 to 526 such that a desired destination can be selected. The displaying unit 303 is a touch panel, and a destination point candidate can be set as the destination point by touching a displayed name of the destination point candidate with a finger. The destination point can also be set by recognizing speech uttered by a user. In the example shown, the destination point candidate display 521 indicates "park"; the destination point candidate display 522 indicates "bookstore"; the destination point candidate display 523 indicates "supermarket"; the destination point candidate display 524 indicates "family restaurant"; the destination point candidate display 525 indicates "amusement park"; and the destination point candidate display 526 indicates "Chinese noodle shop". These items are initially arranged in an order corresponding with the Japanese syllabary.

A display area 501 indicated by heavy lines is an area initially displayed when the destination point setting screen is displayed on the displaying unit 303, while a display area 511 indicated by dot lines is an area displayed on the displaying unit 303 when the screen is scrolled by the pressing of a scroll button 520, etc. Since a considerable number of the destination point candidates usually exist, such scroll display and hierarchical display are used to prevent the screen display from being complicated. For the convenience of description, the above six points (points indicated by the destination point candidate displays 521 to 526) are defined as the destination point candidates in the following description.

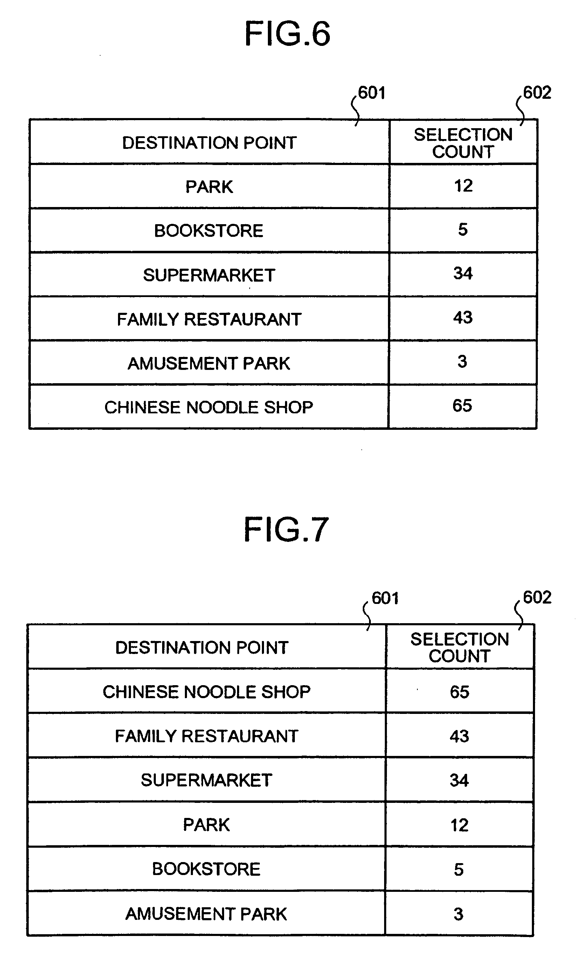

Fig. 6 is a table of examples of destination point candidate selection counts. In the table shown in Fig. 6, a destination point candidate display 601 indicates the destination point candidates in an order corresponding with the Japanese syllabary. A selection count display 602 indicates the number of times each destination point has been selected. As described above, the navigation controlling unit 301 counts the number of times of selection for each destination point candidate (see step S401 of Fig. 4).

In the example shown, the "park" has been selected 12 times, the "bookstore" 5 times, the "supermarket" 34 times, the "family restaurant" 43 times, the "amusement park" 3 times, and the "Chinese noodle shop" 65 times. The number of times of selection is counted regardless of the selection method, i.e., operation input through the user operating unit 302 or by speech recognition.

Fig. 7 is a table illustrating the destination point candidates shown in Fig. 6 in descending order of the selection count after sorting. The destination point candidate display 601 arranged in an order corresponding with the Japanese syllabary in Fig. 6 is sorted in descending order of the selection count, i.e., in order of the "Chinese noodle shop", the "family restaurant", the "supermarket", the "park", the "bookstore", and the "amusement park". The destination points having higher selection counts are extracted as recommended points (see step S403 of Fig. 4). It is assumed here that top three destination points having the highest selection counts are extracted as the recommended points. That is, the "Chinese noodle shop", the "family restaurant", and the "supermarket" are extracted. The destination point candidates extracted as the recommended points are registered in the second dictionary and other destination point candidates are registered in the first dictionary (see step S404 of Fig. 4).

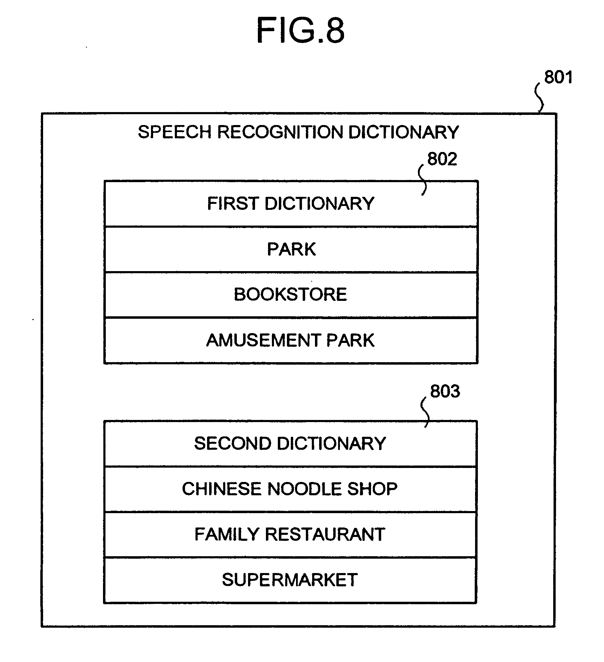

Fig. 8 is a table of phrases registered in the speech recognition dictionaries. A speech recognition dictionary 801 includes a first dictionary 802 and a second dictionary 803. The phrases having higher speech recognition priorities are registered in the first dictionary 802 and the phrases having the lower speech recognition priorities are registered in the second dictionary 803. In the shown example, the "Chinese noodle shop", the "family restaurant", and the "supermarket" extracted as the recommended points are registered in the second dictionary 803. On the other hand, the destination point candidates other than the recommended points, i.e., the "park", the "bookstore", and the "amusement park" are registered in the first dictionary 802.

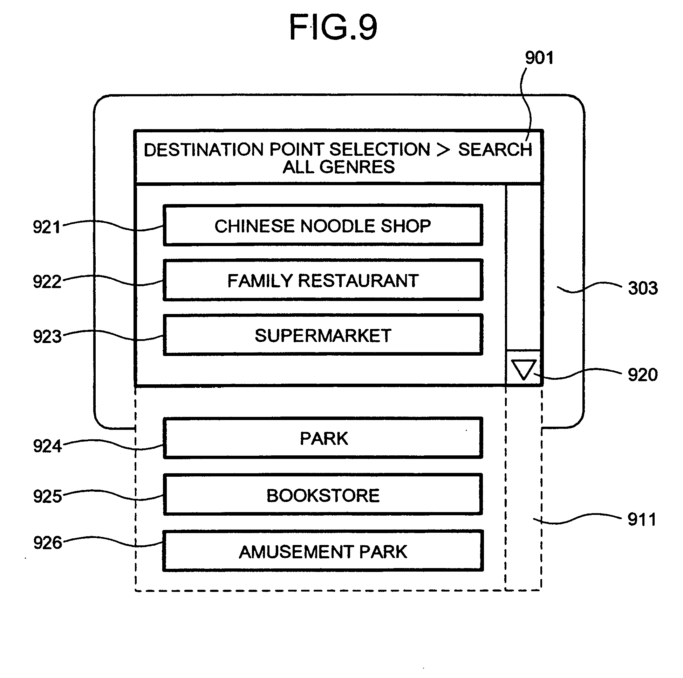

Fig. 9 is a schematic of an example of the destination point setting screen taking into consideration the recommended points. A display area 901 indicated by heavy lines is an area initially displayed when the destination point setting screen is displayed on the displaying unit 303. On the other hand, a display area 911 indicated by dot lines is an area displayed on the displaying unit 303 when the screen is scrolled by pressing down of a scroll button 920, etc.

As shown, the initially displayed display area 901 displays destination point candidate displays 921 to 923 indicating the "Chinese noodle shop", the "family restaurant", and the "supermarket", which are recommended point information. On the other hand, the display area 911 is not displayed unless the scroll button 920 is pressed down to display destination point candidate displays 924 to 926 indicating the "park", the "bookstore", and the "amusement park", which are other destination point candidates.

The displaying unit 303 is a touch panel, and a destination point candidate can be set as the destination point by touching a displayed name of the destination point candidate with a finger. Therefore, a user can set a recommended point, which has a higher selection count, as the destination point without the scroll operation. Therefore, the destination point can easily be set.

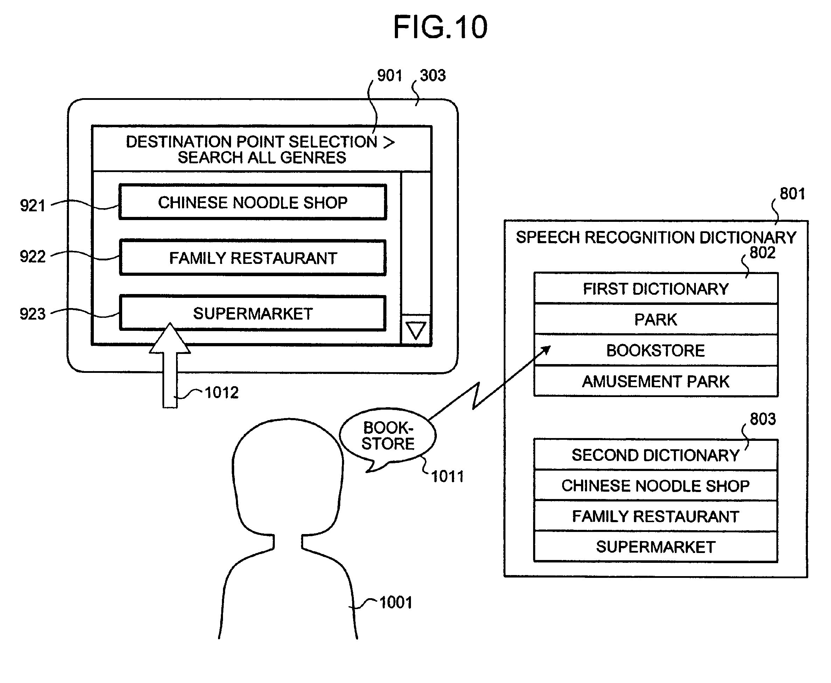

Fig. 10 is a schematic of the destination point setting operation by a user. When selecting a recommended point as the destination point, a user 1001 presses down the destination point candidate displays 921 to 923 indicated in the display area 901 on the displaying unit 303 (an arrow 1012). When selecting a destination point candidate other than the recommended point information, the user utters a name of a facility, for example, "bookstore" (a word balloon 1011). Since "bookstore" is not among the recommended points and is registered in the first dictionary 802, the time required for the speech recognition process can be reduced. "Bookstore" can also be selected by scrolling the display on the displaying unit 303. Although the recommended points can be selected by speech recognition, since the second dictionary 803 is used for the matching process in this case, the time required for the process is longer than that for the phrases registered in the first dictionary 802.

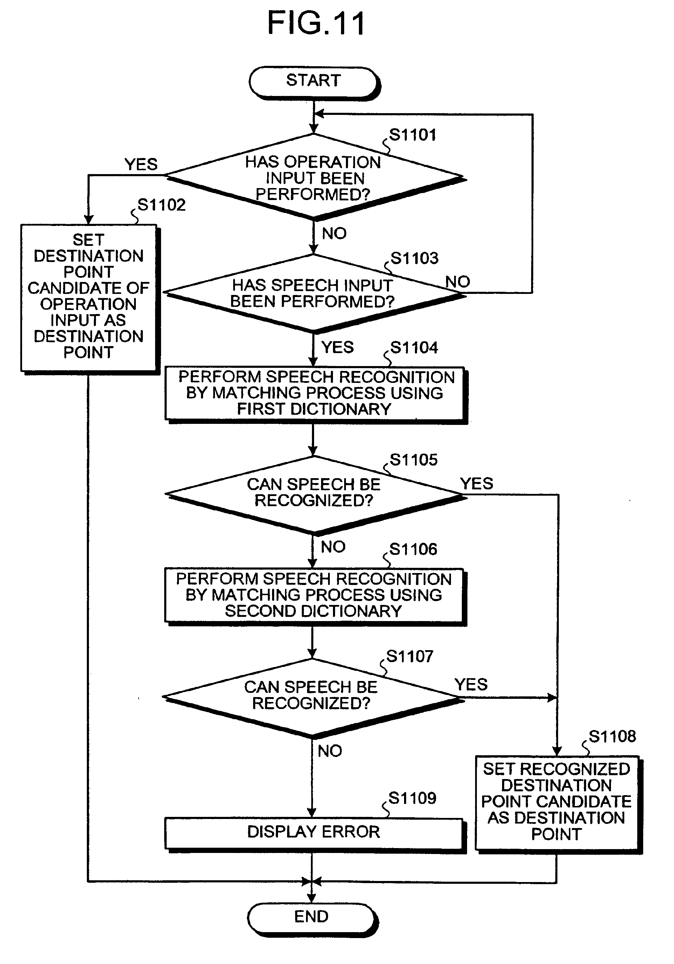

Fig. 11 is a flowchart of a user setting operation process by the navigation apparatus. As shown in Fig. 4, the case of setting a destination point will be taken as an example in the following description. First, the navigation controlling unit 301 determines whether the operation input has been performed for the destination point candidates through the user operating unit 302 (step S1101). In the above example, the user operating unit 302 is a touch panel of the displaying unit 303 and the operation input indicates that the touch panel has been touched. If the operation input has been performed (step S1101: Yes), the destination point candidate input through the operation is set as the destination point (step S1102), and the process of the flowchart is terminated.

If no operation input has been performed (step S1101:No), it is determined whether the speech input has been performed through the microphone 302a (step S1103). If no speech input is performed (step S1103: No), the process returns to step S1101 to wait for the input from a user. On the other hand, if the speech input has been performed (step S1103: Yes), first, the speech recognition is performed by the matching process using the first dictionary (step S1104). It is determined whether the input speech can be recognized by the matching process using the first dictionary (step S1105), and if the speech can be recognized (step S1105: Yes), the process goes to step S1108.

On the other hand, if the speech cannot be recognized (step S1105: No), the speech recognition is performed by the matching process using the second dictionary (step S1106). It is determined whether the input speech can be recognized by the matching process using the second dictionary (step S1107), and if the speech can be recognized (step S1107: Yes), the recognized destination point candidate is set as the destination point (step S1108) and the process of this flowchart is terminated.

On the other hand, if the speech cannot be recognized by the matching process with the second dictionary (step S1107: No), an error display is displayed on the displaying unit 303 (step S1109) and the process of this flowchart is terminated. The error display includes display prompting the user to utter the speech again and display prompting the user to retry using another synonymous term. The error notification is not limited to the display on the displaying unit 303 and may be performed with sound, for example.

The navigation apparatus 300 executes the user setting operation process by the above process. Since the recommended points are initially displayed on the screen, a user can quickly select a point with the touch panel operation. Although the destination point candidates other than the recommended points are not displayed on the screen, the candidates are registered in the first dictionary having the higher speech recognition priority and can preferentially be set verbally.

Although the recommended points are extracted based on the selection count for each destination point candidate in the above description, it is not limited thereto and, for example, the recommended points may be selected based on a selection count of a genre, to which the destination point candidates belong.

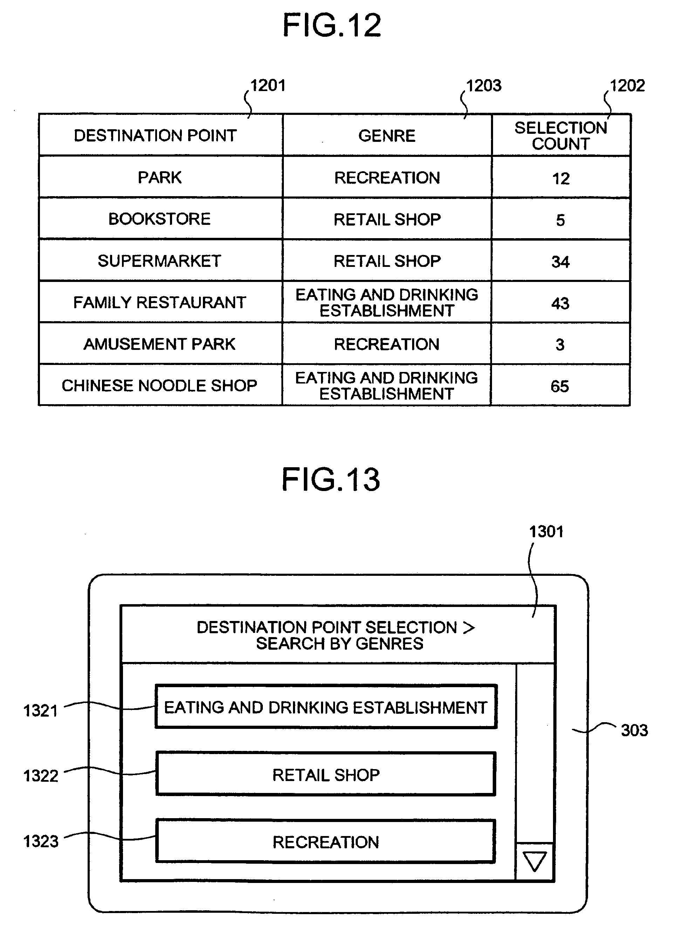

Fig. 12 is a table of selection count examples for the destination point candidates. A destination point candidate display 1201 and a selection count display 1202 are the same as those shown in Fig. 6. A genre attribute display 1203 indicates genres the destination point candidates belong to. In the example shown, "park" and "amusement park" belong to "recreation"; "bookstore" and "supermarket" belong to "retail shop"; and "family restaurant" and "Chinese noodle shop" belong to "eating and drinking establishment".

With regard to the facilities belonging to "recreation" ("park" and "amusement park"), the total selection count is 12+3=15. With regard to the facilities belonging to "retail shop" ("bookstore" and "supermarket"), the total selection count is 5+34=39. With regard to the facilities belonging to "eating and drinking establishment" ("family restaurant" and "Chinese noodle shop"), the total selection count is 43+65=108. Therefore, it can be known that the most frequently selected facilities are those belonging to "eating and drinking establishment", followed by the facilities belonging to "retail shop" and "recreation".

Since the destination point candidates are generally categorized by the attributes thereof, the destination point candidates can be narrowed down by genres. Therefore, genres including the destination point candidates frequently selected as the destination point are preferentially displayed, and high speech recognition priority is given to genres including the destination point candidates not frequently selected as the destination point. This allows a user to efficiently perform the setting operation of the destination point.

Fig. 13 is a schematic of an example of the destination point setting screen taking into consideration the selection count by genre. The displaying unit 303 displays a selection screen 1301 for selecting a destination point from genres and displays genre displays 1321 to 1323 of genres to which the destination point candidates belong. As described above, the eating and drinking establishment is the most frequently selected genre and is displayed at the top, followed by the retail shop and the recreation. If any of the genre displays 1321 to 1323 is pressed down, the screen shifts to a display screen that displays the facilities belonging to the respective genre. The facilities belonging to the genres can be directly selected through the speech recognition.

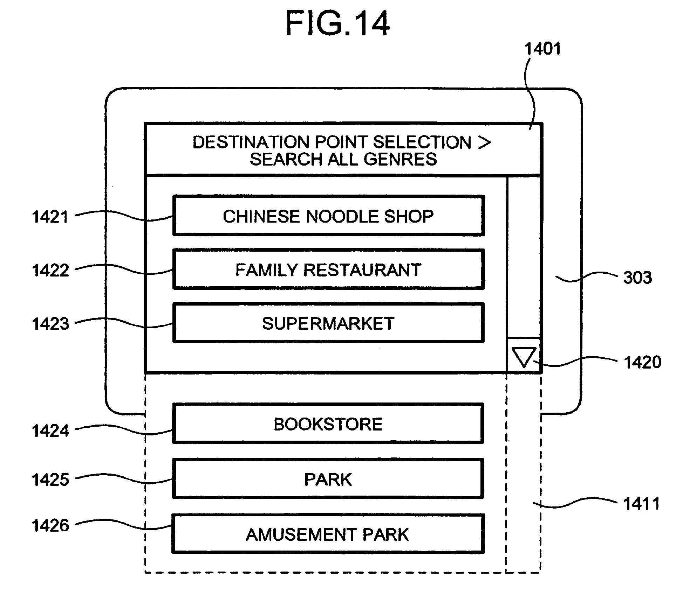

Fig. 14 is a schematic of an example of the destination point setting screen taking into consideration the selection count by genre. The selection count by genres can be taken into consideration not only when selecting the facilities of the destination point candidates from the genres as shown in Fig. 13, but also when all the destination point candidates are displayed for selection as shown in Fig. 14.

A display area 1401 indicated by heavy lines is an area initially displayed when the destination point setting screen is displayed on the displaying unit 303. On the other hand, a display area 1411 indicated by dot lines is an area displayed on the displaying unit 303 only when the screen is scrolled by pressing down of a scroll button 1420, etc.

As shown, the initially displayed display area 1401 displays destination point candidate displays 1421 and 1422 of "Chinese noodle shop" and "family restaurant", which are facilities belonging to the genre "eating and drinking establishments" having the highest selection count. Destination point candidate displays 1423 and 1424 are subsequently displayed in the display area 1411 only when displayed the scroll button 920 is pressed down, for "supermarket" and "bookstore", which are facilities belonging to the genre "retail shop" having the second-highest selection count. Under these displays, destination point candidate displays 1425 and 1426 are displayed for "park" and "amusement park" which are facilities belonging to the genre "recreation" having the lowest selection count.

In this case, the facilities belonging to the recreation such as "park" and "amusement park" are registered into the first dictionary of the speech recognition dictionary. The facilities belonging to the eating and drinking establishment such as "Chinese noodle shop" and "family restaurant", and the facilities belonging to the retail shop such as "supermarket" and "bookstore" are registered into the second dictionary.

By preferentially displaying the facilities belonging to the frequently selected genre, a user can quickly set the frequently utilized facilities as the destination point through the touch panel operation. Although the facilities not frequently selected are not displayed on the screen, the facilities are registered in the first dictionary having the higher speech recognition priority and can preferentially be set verbally. Particularly since genres of the facilities not frequently utilized are not known in some cases, more efficient selection can often be made by selecting the facilities by speech recognition instead of tracking the hierarchy of the screen display. The speech recognition process can be performed efficiently by preferentially performing the speech recognition for the phrases that are likely to be input by the speech recognition.

According to the navigation apparatus 300 according to the first embodiment, the destination point can be set efficiently by changing the display priority and the speech recognition priority according to the number of times the destination point is selected as described above. By displaying only the destination point candidates having higher selection counts, the items displayed on the destination point setting screen can be reduced to achieve efficient screen display.

### Second Example

The example related to setting of the destination point using the displaying unit 303 and the speech recognition has been described in the first example. In a second example, an example related to the function allocation to hardware keys will be described. Vehicle-mounted devices such as the navigation apparatus include hardware keys physically disposed on a portion of the main body. Some hardware keys have no symbol or function initially allocated, and a function necessary for each key can freely be allocated by user setting (hereinafter, such keys are referred to as function keys). In the second example, more efficient user operation can be achieved by combining the function allocation to the function keys and the speech recognition. Since the configuration of the navigation apparatus of the second example is the same as that of the navigation apparatus 300 of the first example shown in Fig. 3, detailed description thereof will be omitted and the same reference numerals as the first example are used in the following description.

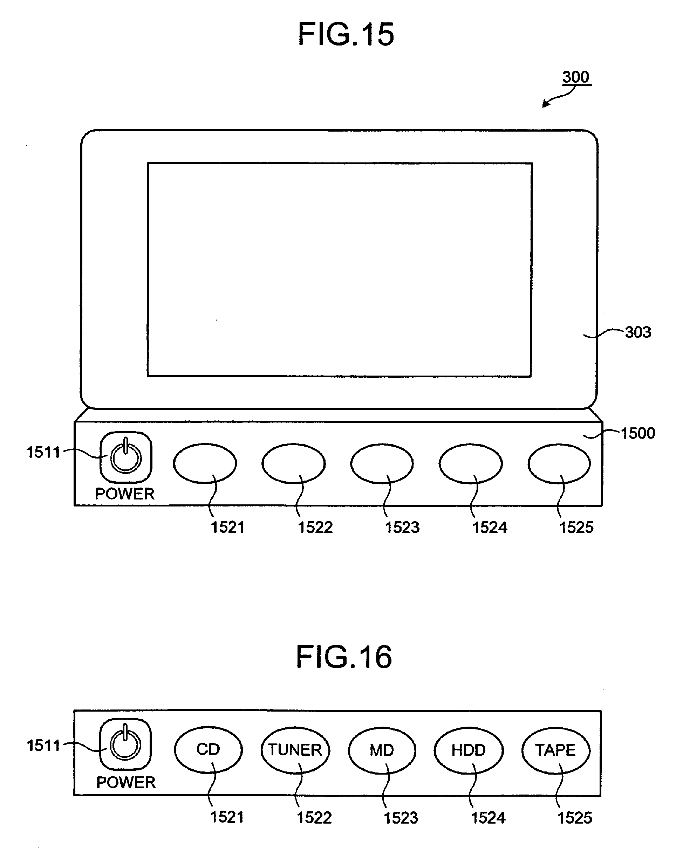

Fig. 15 is a schematic of an external appearance of the navigation apparatus according to the second example. The navigation apparatus 300 is configured by the displaying unit 303 and a main body unit 1500. The displaying unit 303 displays the navigation screen, the setting operation screen, etc. The main body unit 1500 houses the constituent elements of the navigation apparatus 300 shown in Fig. 3 other than the displaying unit 303.

The main body unit 1500 is disposed with buttons having fixed functions such as a power button 1511 as well as function keys 1521 to 1525 to which functions can be allocated by user setting. For example, functions related to audio can be allocated to the function keys 1521 to 1525, and it is assumed that any one of "CD", "TUNER", "MD", "HDD", and "TAPE" functions is allocated to each of the function keys 1521 to 1525.

The functions allocated to the function keys 1521 to 1525 can be executed by pressing down the function keys 1521 to 1525 and can also be executed when a user utters the names of the functions. The speech uttered by the user is recognized by the speech recognizing unit 312 (see Fig. 3) and the navigation controlling unit 301 (see Fig. 3) executes the function recognized by speech.

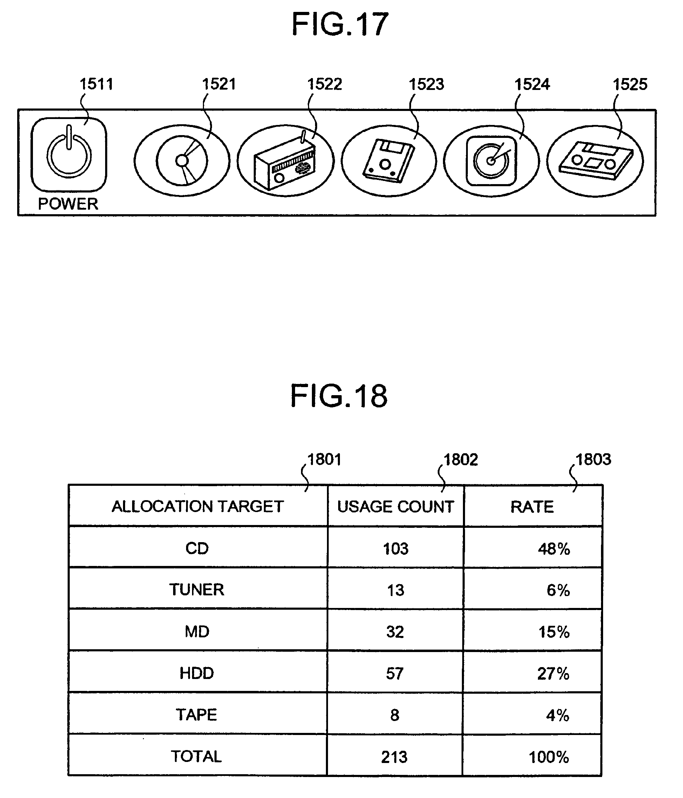

Figs. 16 and 17 are schematics of function indicator examples of the function keys. The function keys 1521 to 1525 can use characters or images to indicate what function corresponds to each key. The functions of the keys are indicated by characters in Fig. 16 and by images in Fig. 17. The functions of the keys may also be output as sound by a finger approaching the function keys 1521 to 1525.

The allocation of the functions to the function keys 1521 to 1525 is determined according to the frequency that the function is executed. In general, efficiency is improved and operational errors, etc., are reduced by locating an operation target closer to the operator. Therefore, frequently used functions are allocated to the keys close to a driver (operator) (on the side of the function key 1525), and functions not frequently used are allocated to the keys farther from the operator (on the side of the function key 1521).

Fig. 18 is a table of examples of usage frequencies and usage rates of the functions. In the table shown in Fig. 18, an allocated function display 1801 shows functions that can be allocated to the function keys 1521 to 1525. A usage count display 1802 shows the number of times the functions are used. A usage rate display 1803 displays the usage rates of the functions.

In the example shown, the usage count of "CD" is 103 and the usage rate is 48%. The usage count of "TUNER" is 13 and the usage rate is 6%. The usage count of "MD" is 32 and the usage rate is 15%. The usage count of "HDD" is 57 and the usage rate is 27%. The usage count of "TAPE" is 8 and the usage rate is 4%. Therefore, it can be known that the frequencies of usage of the functions are in order of "CD", "HDD", "MD", "TUNER", and "TAPE".

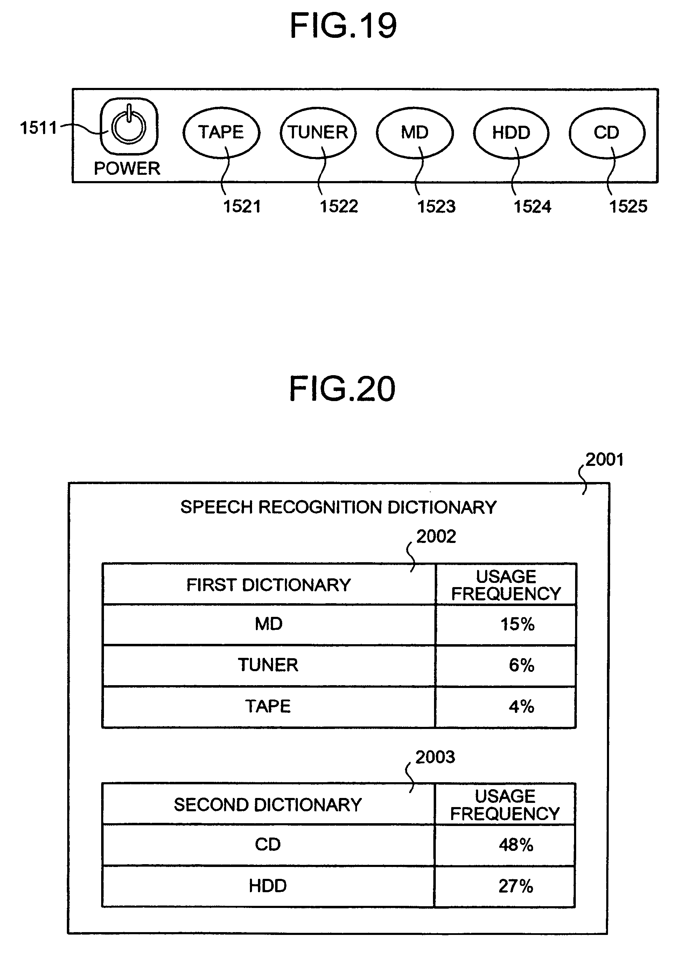

Fig. 19 is a schematic of the function allocation to the function keys taking into consideration the usage rates of the functions. The functions are allocated in order of "CD", "HDD", "MD", "TUNER", and "TAPE" from the function key 1525 closest to the operator to the function key 1521 furthest from the operator, thereby enabling the keys with the functions frequently used by a user to be located closer to the operator to improve the operability when using these functions.

On the other hand, when using the functions allocated to the function keys farther from the driver seat (on the side of the function key 1521) (functions that are not frequently used), operation using the key is often cumbersome. In such a case, it is conceivable that a user executes these functions by the speech recognition. Therefore, the speech recognition priority is increased for the functions allocated to the function keys farther from the driver seat(functions not frequently used) to enable efficient speech recognition.

Fig. 20 is a table of phrases registered in the speech recognition dictionary for executing the functions allocated to the function keys. A speech recognition dictionary 2001 includes a first dictionary 2002 and a second dictionary 2003. The phrases having the higher speech recognition priorities are registered in the first dictionary 2002 and the phrases having the lower speech recognition priorities are registered in the second dictionary 2003. In the example shown, the functions that are not frequently used, i.e., "MD", "TUNER", and "TAPE" are registered in the first dictionary 2002. On the other hand, the functions frequently used, i.e., "CD" and "HDD" are registered in the second dictionary 2003.

The functions registered in the first dictionary are allocated to the function keys farther from the driver seat (on the side of the function key 1521) and are likely to be executed by the speech recognition rather than by key operation. Therefore, these functions are registered in the first dictionary having higher speech recognition priority. The functions registered in the second dictionary are allocated to the function keys close to the driver seat (on the side of the function key 1525) and are likely to be executed by key operation rather than speech recognition. Therefore, these functions are registered in the second dictionary having lower speech recognition priority. Therefore, the phrases to be speech-recognized can be preferentially speech-recognized, and the efficiency of the speech recognition process can be improved.

As described above, with the navigation apparatus 300 according to the second example, positions of function keys assigned to the functions are determined according to the usage frequencies of the functions allocated to the function keys 1521 to 1525. The functions with higher usage frequencies are allocated to the keys closer to the operator to facilitate the key operation. The speech recognition priority is increased for the functions allocated to the keys farther from the operator to efficiently perform the speech recognition, thereby enabling improve the operability of the navigation operation.

The speech recognizing method explained in the present embodiment can be implemented by a computer such as a personal computer and a workstation executing a program that is prepared in advance. This program is recorded on a computer-readable recording medium such as a hard disk, a flexible disk, a CD-ROM, an MO, and a DVD, and is executed by being read out from the recording medium by a computer. This program can be a transmission medium that can be distributed through a network such as the Internet.

## Claims

1. A speech recognizing apparatus comprising:
a speech input unit to which speech is input;
a displaying unit that displays a plurality of expected-words that are preset;
an operation input unit that enables selection of any one of the expected-words displayed by the displaying unit;
a counting unit that counts a) a number of times each of the expected-words is included in the speech input to the speech input unit and b) a number of times each of the expected-words is selected through the operation input unit;
an extracting unit that extracts, from among the expected-words and based on the numbers of times counted by the counting unit, a preferential display word that is displayed preferentially;
a display controlling unit that preferentially displays, on the displaying unit, the preferential display word extracted by the extracting unit; and
a speech recognizing unit that performs, with priority given to the expected-words excluding the preferential display word, speech recognition of the speech input to the speech input unit.

2. The speech recognizing apparatus according to claim 1, wherein the extracting unit extracts, as the preferential display word, the expected-word having the numbers of times, counted by the counting unit, that are high.

3. The speech recognizing apparatus according to claim 1, wherein
the counting unit counts the numbers of times for each genre among a plurality of genres to which the expected-words belong, and
the extracting unit extracts, as the preferential display word, the expected-word belonging to the genre having the numbers of times, counted by the counting unit, that are high.

4. The speech recognizing apparatus according to any one of claims 1 to 3, wherein
the operation input unit is a touch panel, and
the display controlling unit displays a plurality of the preferential display words in descending order of the numbers of times.

5. An information processing apparatus comprising:
a speech input unit to which speech is input;
a plurality of operation input units that enable any one of a plurality of functions of an apparatus to be executed;
a counting unit that counts a) a number of times a name of a function among the functions is included in the speech input to the speech input unit and b) a number of times each of the functions is executed through the operation input units;
a determining unit that determines, based on the numbers of times counted by the counting unit, a preferential allocation function to be allocated to an operator input unit having a position close to an operator, among the operation input units; and
a speech recognizing unit that performs, with priority given to the functions excluding the preferential allocation function determined by the determining unit, speech recognition of the speech input to the speech input unit.

6. A speech recognizing method comprising:
a speech inputting step of inputting speech;
a displaying step of displaying a plurality of expected-words that are preset;
an operation inputting step of selecting of any one of the expected-words displayed at the displaying step;
a counting step of counting a) a number of times each of the expected-words is included in the speech input to the speech input unit and b) a number of times each of the expected-words is selected through the operation input unit;
an extracting step of extracting, from among the expected-words and based on the numbers of times counted at the counting step, a preferential display word that is displayed preferentially;
a display controlling step of controlling to preferentially display, at the displaying step, the preferential display word extracted at the extracting step; and
a speech recognizing step of performing, with priority given to the expected-words excluding the preferential display word, speech recognition of the speech input at the speech inputting step.

7. An information processing method comprising:
a speech inputting step of inputting speech;
an operation inputting step of executing any one of a plurality of functions;
a counting step of counting a) a number of times a name of a function among the functions is included in the speech input at the speech inputting step and b) a number of times each of the functions is executed at the operation inputting step;
a determining step of determining, among a plurality of the operation inputting steps and based on the number of times counted at the counting step, a preferential allocation function to be allocated to a position close to an operator; and
a speech recognizing step of performing, with priority given to the functions excluding the preferential allocation function determined at the determining step, speech recognition of the speech input at the speech inputting.

8. A program that causes a computer to execute the method according to any one of claims 6 and 7.

9. A computer-readable recording medium that stores therein the program according to claim 8.

## Patentansprüche

1. Spracherkennungsgerät, umfassend:
eine Spracherkennungseinheit für die Spracheneingabe;
eine Wiedergabevorrichtung zur Anzeige einer Vielzahl von voreingestellten, erwarteten Wörtern;
eine Eingabebedieneinheit zur Auswahl eines beliebigen der erwarteten Wörter, die von der Anzeigevorrichtung wiedergegeben werden;
eine Zählvorrichtung, die a) die Häufigkeit der Eingaben jedes der erwarteten Wörter in die Eingabe des Spracheneingabeteils und b) die Häufigkeit der Auswahl jedes der erwarteten Wörter durch die Eingabebedieneinheit zählt;
eine Filtereinheit, die aus den erwarteten Worten und auf der Basis der von der Zählvorrichtung ermittelten Häufigkeit ein prioritär anzuzeigendes Wort auswählt, das bevorzugt wiedergegeben wird;
ein Wiedergabesteuerteil, das vorzugsweise auf der Wiedergabevorrichtung die bevorzugt wiederzugebenden Wörter anzeigt, die von der Filtereinheit ausgewählt worden sind; und
ein Spracherkennungsteil, das priorität für die erwarteten Wörter ausschließlich des bevorzugt anzuzeigenden Worts die Spracherkennung der Sprachengabe in die Spracherkennungseinheit durchführt.

2. Das Spracherkennungsgerät gemäß Anspruch 1, bei dem die Filtereinheit als bevorzugt anzuzeigendes Wort das erwartete Wort herausfiltert, für das die von der Zählvorrichtung ermittelte Häufigkeitszahl hoch ist.

3. Das Spracherkennungsgerät gemäß Anspruch 1, bei dem
die Zählvorrichtung die Häufigkeitszahl ermittelt, mit der erwartete Wörter in ein gegebenes Genre unter einer Vielzahl von Genres fallen, in die die erwarteten Wörter gehören, und
wobei die Filtereinheit als bevorzugt anzuzeigendes Wort das erwartet Wort anzeigt, das in das Genre gehört, bei dem die von der Zählvorrichtung gezählte Häufigkeitszahl des Auftretens hoch ist.

4. Das Spracherkennungsgerät gemäß einem der Ansprüche 1 bis 3, bei dem
es sich bei der Eingabebedieneinheit um einen Berührungsbildschirm handelt, und bei dem die Wiedergabesteuervorrichtung eine Vielzahl der bevorzugt anzuzeigenden Wörter in absteigender Ordnung der Häufigkeitszahl wiedergibt.

5. Informationsverarbeitungsgerät, umfassend:
ein Spracheneingabeteil für die Spracheneingabe;
eine Vielzahl von Eingabebedieneinheiten, die die Ausführung einer Vielzahl der von dem Gerät auszuführenden Funktionen ermöglichen;
eine Zählvorrichtung die a) die Häufigkeit zählt, mit der der Name einer Funktion unter den Funktionen in der Spracheneingabe in den Spracheneingabeteil erscheint und b) die Häufigkeit, mit der jede der Funktionen durch die Eingabebedieneinheit ausgeführt wird;
eine Auswertungseinheit, die auf der Basis der von der Zählvorrichtung ermittelten Häufigkeitszahl eine bevorzugte Zuordnungsfunktion berechnet, die einer Bedieneingabeeinheit unter den Bedieneingabeeinheiten in der Nähe eines Bedieners zuzuordnen ist; und
einer Spracherkennungseinheit, die prioritär, jedoch unter Ausschluss der von der Auswertungseinheit ermittelten bevorzugten Zuordnungsfunktion die Spracherkennung der Spracheneingabe in den Spracheneingabeteil ausführt.

6. Methode zur Spracherkennung, umfassend:
einen Spracheneingabeschritt mit Spracheneingabe;
einem Anzeigeschritt mit Wiedergabe einer Vielzahl von erwarteten, voreingestellten Worten;
einen Bedienungseingabeschritt zur Auswahl eines beliebigen der im Anzeigeschritt wiedergegebenen erwarteten Wörter;
einen Zählschritt zur Zählung a) der Häufigkeit, mit der jedes der erwarteten Wörter in der Spracheneingabe in den Spracheneingabeteil erscheint und b) der Häufigkeit, mit der jedes der erwarteten Wörter durch das Bedieneingabeteil ausgewählt wird;
einen Auswertungsschritt zum Herausfiltern eines bevorzugt wiederzugebenden Worts aus den erwarteten Wörtern und auf der Basis der während des Zählschritts für ein bevorzugt wiederzugebenden Worts ermittelten Häufigkeitszahl;
einen Anzeige-Steuerschritt zur Steuerung der bevorzugten Wiedergabe während das Anzeigeschritts des beim Auswertungsschritt herausgefilterten, bevorzugt wiederzugebenden Worts, und
einen Spracherkennungsschritt mit Durchführung priorität für die erwarteten Wörter ausschließlich des bevorzugt wiederzugebenden Worts, unter Spracherkennung der Spracheneingabe während des Spracheneingabeschritts.

7. Methode zur Informationsverarbeitung, umfassend:
einen Spracheneingabeschritt mit Spracheneingabe;
einen Bedieneingabeschritt mit Ausführung einer Funktion unter einer Vielzahl von Funktionen;
einen Zählschritt zur Zählung a) der Häufigkeit, mit der der Name einer Funktion unter den Funktionen in die Spracheneingabe während des Spracheneingabeschritts einbezogen wird und b) der Häufigkeit, mit der jede der Funktionen während des Bedieneingabeschritts ausgeführt wird;
einen Auswertungsschritt zur Berechnung einer bevorzugten Zuordnungsfunktion die aus der Vielzahl der Bedieneingabeschritte und auf der Basis der Häufigkeitszahl während des Zählschritts ermittelt und einer Position in dichter Nähe zu einem Bediener zugeordnet wird; und
Spracherkennungsschritt mit Ausführung von Spracherkennung der während der Spracheneingabe eingegebenen Sprache prioritär für die Funktionen ausschließlich der im Auswertungsschritt ermittelten bevorzugten Zuordnungsfunktionen.

8. Ein Programm, das bei einem Computer die Ausführung der Methode gemäß einem der Ansprüche 6 und 7 bewirkt.

9. Ein computerlesbarer Datenträger, auf dem das Programm gemäß Anspruch 8 gespeichert wird.

## Revendications

1. Un appareil de reconnaissance de la parole se composant des éléments suivants :
un groupe de saisie de paroles dans lequel on saisit des paroles
un groupe d'affichage qui affiche une pluralité de mots attendus qui sont programmés à l'avance
un groupe de saisie opérationnelle qui permet de choisir n'importe lequel des mots attendus qu'affiche le groupe d'affichage
un groupe compteur qui compte a) le nombre de fois que chaque mot attendu fait partie des paroles saisies par le groupe de saisie de paroles et b) le nombre de fois que chaque mot attendu est choisi par le groupe de saisie opérationnelle un groupe d'extraction qui extrait, parmi les mots attendus et en se basant sur le nombre de fois qu'il y a eu comptage par le groupe compteur, un mot préférentiel d'affichage qui vient s'afficher de manière préférentielle
un groupe de contrôle de l'affichage qui affiche de manière préférentielle sur le groupe d'affichage le mot préférentiel d'affichage extrait par le groupe extracteur
un groupe de reconnaissance de la parole qui assure, en fonction de la priorité attribuée aux mots attendus et à l'exclusion du mot préférentiel d'affichage, la reconnaissance de la parole pour les paroles saisies par le groupe de saisie de paroles.

2. L'appareil de reconnaissance de la parole qui est décrit dans la revendication 1 mais dans lequel le groupe d'extraction extrait, en tant que mot préférentiel d'affichage, le mot attendu qui a été compté un nombre élevé de fois par le groupe compteur.

3. L'appareil de reconnaissance de la parole qui est décrit dans la revendication 1 mais dans lequel :
le groupe compteur compte le nombre de fois pour chaque genre parmi une pluralité de genres auxquels les mots attendus appartiennent
le groupe extracteur extrait, en tant que mot préférentiel d'affichage, le mot attendu qui appartient au genre qui a été compté un nombre élevé de fois par le groupe compteur.

4. L'appareil de reconnaissance de la parole qui est décrit dans l'une ou l'autre des REVENDICATIONS 1 à 3 mais dans lequel :
le groupe de saisie opérationnelle est un panneau tactile
le groupe de contrôle de l'affichage affiche une pluralité de mots préférentiels d'affichage par ordre décroissant du nombre de fois qu'ils apparaissent.

5. Un appareil de traitement des informations composé :
d'un groupe de saisie de paroles sur lequel des paroles sont saisies
d'une pluralité de groupes de saisies opérationnelles qui permettent d'exécuter n'importe laquelle d'une pluralité de fonctions d'un appareil
d'un groupe compteur qui compte a) le nombre de fois que le nom d'une fonction, parmi une pluralité de noms de fonctions, est inclus à la saisie de paroles par le groupe de saisie de paroles et b) le nombre de fois que chacune de ces fonctions est exécutée par le biais des groupes de saisies opérationnelles
un groupe de détermination qui détermine, sur la base du nombre de fois qu'il y a eu comptage par le groupe compteur, une fonction d'attribution préférentielle à attribuer à un groupe de saisie opérationnelle dont la position est proche d'un opérateur, parmi les groupes de saisies opérationnelles
un groupe de reconnaissance de la parole qui exécute, en tenant compte de la priorité accordées aux fonctions, à l'exclusion de la fonction d'attribution préférentielle déterminée par le groupe de détermination, la reconnaissance de la parole pour la saisie des paroles à destination du groupe de saisie de la parole.

6. Une méthode de reconnaissance de la parole qui se compose :
d'une phase de saisie de paroles
d'une phase d'affichage qui permet d'afficher une pluralité de mots attendus qui sont programmés à l'avance
d'une phase de saisie opérationnelle qui permet de sélectionner n'importe lequel des mots attendus qui s'affichent lors de la phase d'affichage
d'une phase de comptage qui permet de compter a) le nombre de fois que chacun des mots attendus fait partie des paroles saisies par le groupe de saisie de la parole et b) le nombre de fois que chacun des mots attendus est sélectionné par le biais du groupe de saisie opérationnelle
d'une phase d'extraction qui permet d'extraire, parmi les mots attendus et sur la base du nombre de fois qu'il y a eu comptage lors de la phase de comptage, un mot d'affichage préférentiel qui s'affiche de manière préférentielle
d'une phase de contrôle de l'affichage qui permet de contrôler l'affichage préférentiel obtenu lors de la phase d'affichage, le mot d'affichage préférentiel extrait lors de la phase d'extraction
d'une phase de reconnaissance de la parole qui permet d'exécuter, en fonction de la priorité attribuée aux mots attendus, à l'exclusion du mot d'affichage préférentiel, la reconnaissance des paroles saisies lors de la phase de saisie de paroles.

7. Une méthode de traitement des informations qui se compose :
d'une phase de saisie de la parole qui permet de saisir les paroles
d'une phase de saisie opérationnelle qui permet d'exécuter n'importe laquelle d'une pluralité de fonctions
d'une phase de comptage qui permet de compter a) le nombre de fois que le nom d'une fonction, parmi une pluralité de fonctions, fait partie des paroles saisies lors de la phase de saisie de la parole et b) le nombre de fois que chacune des fonctions est exécutée lors de la phase de saisie opérationnelle
d'une phase de détermination qui permet de déterminer, parmi une pluralité de phases de saisies opérationnelles et sur la base du nombre de fois qu'il y a eu comptage lors de la phase de comptage, une fonction d'attribution préférentielle à attribuer à une position proche d'un opérateur
d'une phase de reconnaissance de la parole qui permet de réaliser, en fonction de la priorité attribuées aux fonctions, à l'exception de la fonction d'attribution préférentielle déterminée lors de la phase de détermination, la reconnaissance de la parole pour les paroles saisies lors de la saisie des paroles.

8. Un programme qui permet à un ordinateur d'exécuter la méthode en conformité avec les revendications 6 ou 7.

9. Un support d'enregistrement qui peut être lu par un ordinateur et qui mémorise le programme décrit à la revendication 8.
